(19) Europäisches Patentamt
European Patent Office
Office européen des brevets

(11) Veröffentlichungsnummer: **0 304 827 B1**

(12)

# EUROPÄISCHE PATENTSCHRIFT

(45) Veröffentlichungstag der Patentschrift: **13.05.92**

(51) Int. Cl.⁵: **F01K 23/10**, F02C 7/08, F02C 9/54, F01K 23/16

(21) Anmeldenummer: **88113546.1**

(22) Anmeldetag: **20.08.88**

---

(54) **Leistungsregelung von Kombianlagen.**

---

(30) Priorität: **24.08.87 CH 3246/87**

(43) Veröffentlichungstag der Anmeldung:
**01.03.89 Patentblatt 89/09**

(45) Bekanntmachung des Hinweises auf die Patenterteilung:
**13.05.92 Patentblatt 92/20**

(84) Benannte Vertragsstaaten:
**CH DE LI NL SE**

(56) Entgegenhaltungen:
DE-A- 2 731 387    DE-A- 3 002 615
DE-A- 3 002 615    DE-A- 3 444 433
GB-A- 2 141 785    GB-A- 2 170 555
US-A- 3 150 487    US-A- 4 578 944

PATENT ABSTRACTS OF JAPAN, Band 10, Nr. 200 (M-498)[2256], 12. Juli 1986

PATENT ABSTRACTS OF JAPAN, Band 7, Nr. 211 (M-243)[1356], September 1983

(73) Patentinhaber: **BBC Brown Boveri Aktiengesellschaft**

**CH-5401 Baden(CH)**

(72) Erfinder: **Frutschi, Hansulrich**
**Bruggerstrasse 9**
**CH-5223 Riniken(CH)**

---

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Rank Xerox (UK) Business Services
(3.08/2.19/2.0)

**Beschreibung**

Die Erfindung betrifft die Leistungsregelung einer kombinierten Gas-/Dampfturbinen-Kraftwerksanlage, im wesentlichen bestehend aus mindestens einer Gasturbinengruppe, einem Abhitzedampferzeuger, einer Dampfturbine, einem Generator und einem Kondensator.

STAND DER TECHNIK

Unter dem Begriff "Kombinierte Gas-/Dampfturbinen-Kraftwerksanlage" - im folgenden Kombianlage genannt - ist immer das Zusammenwirken einer Gasturbogruppe mit mindestens einem Dampfturbinenkreislauf zu verstehen, wobei die Gasturbinenabgase durch einen Abhitzedampferzeuger (= Abhitzekessel) geleitet werden, in welchem das Restwärmepotential dieser Abgase zur Erzeugung des für die Beaufschlagung der Dampfturbine benötigten Dampfes herangezogen wird. Diese zusätzliche Dampfleistung führt zu einem höheren thermischen Wirkungsgrad der Anlage.

Bei reduzierter benötigter Leistung kann dieser Teillastbetrieb über die Brennstoffregulierung geschehen, indem durch Verminderung des Brennstoffstromes, aber bei nahezu konstant bleibendem Luftstrom, die Turbineneintrittstemperatur abgesenkt wird.

Diese an sich einfache Erstellung eines Teillastbetriebes bei solchen Anlagen erweist sich hinsichtlich Wirkungsgradeinbusse als zu wenig attraktiv, sinkt doch der Wirkungsgrad beinahe direkt proportional zur Leistungsreduktion ab. Arbeitet nämlich die Anlage bei Vollastbetrieb mit einem thermischen Wirkungsgrad von ca. 50 %, so erreicht sie bei einem 60 %-igen Teillastbetrieb nur noch einen thermischen Wirkungsgrad von bloss ca. 42 %. Auf dem Weg diese relativ hohe Wirkungsgradeinbusse in engeren Grenzen zu halten, wird bei modernen Kombianlagen die Leistungsabsenkung zusätzlich über eine Verstellung der Verdichterleitschaufeln vorgenommen. Bei dieser Regelung erfährt der thermische Wirkungsgrad eine kleinere Einbusse, Grössenordnung bis ca. 2 Prozentpunkte, indessen kann der Massendurchsatz und damit die Leistung nur bis auf ca. 80 % gesenkt werden. Die Grenze des so praktizierten Regelbereichs, eben 100 - 80 %, ist durch den starken Anstieg der Turbinenaustrittstemperatur begrenzt, welche die Folge des bei möglichst konstant hoher Turbineneintrittstemperatur sinkenden Druckverhältnisses ist.

Somit stösst auch diese Art von Leistungsregelung an Grenzen: Bei einer Teillast von 80 % steigt durch die Verstellung der Verdichterleitschaufeln die Temperatur der Turbinenabgase auf den noch zulässigen Höchstwert an; eine weitere Reduzierung der Teillast durch Verstellung der Verdichterleitschaufeln ist anlagetechnisch und im Lichte der damit erzielbaren Wirkungsgrade nicht empfehlenswert.

Peilt man demnach tiefere Teillastwerte an, so müsste der Betrieb ab einer Teillast von 80 % wiederum über eine reine Brennstoffregulierung geschehen, dies dann allerdings unter Inkaufnahme der bereits erwähnten Nachteile.

Aus DE-A-27 31 387 ist eine Luftmengenregelung in einer Gasturbine mittels eines Drosselventils bekanntgeworden. Des weiteren ist aus dieser Druckschrift zu entnehmen, dass eine Vorerwärmung der Ansaugluft durch eine Abgasrückführung stattfindet. Beide Massnahmen weisen einzeln für sich betrachtet Unvollkommenheiten auf, die sich in ihrem Umfeld als nachteilig erweisen.

Zunächst ist darauf hinzuweisen, dass eine Drosselung, wie sie hier vorgeschlagen wird, immer eine Exergievernichtung darstellt. Dies wirkt schwer auf den Wirkungsgrad einer Kombianlage, wenn hier die Leistungsregelung über eine Luftmengenregelung mittels eines Drosselventils geschieht. Anzustreben wäre hier aber vielmehr, eine reine Mengenregulierung vorzusehen.

Die andere Massnahme, nämlich die Vorerwärmung der Ansaugluft durch Abgasrückführung zu gestaltet,führt rasch zu einem nachteiligen Zustand, der sich darin äussert, dass der Verdichter anhand dieser Vorkehrung rasch einen Verschmutzungsgrad erhält, der die Betriebssicherheit, die Verfügbarkeit sowie die Leistung selbst des Verdichters in Mitleidenschaft zieht.

Aus US-A-3,150,487 ist eine Vorerwärmung der Ansaugluft durch indirekte Erhitzung mittels Dampfes aus dem Abhitzedampferzeuger bekanntgeworden. Diese Massnahme bildet aber einen reinen Exergieverlust, der sich unmittelbar auf den Wirkungsgrad der Anlage negativ bemerkbar macht.

AUFGABE DER ERFINDUNG

Hier will die Erfindung Abhilfe schaffen. Der Erfindung, wie sie in den Ansprüchen gekennzeichnet ist, liegt die Aufgabe zugrunde, bei einer kombinierten Gas-/Dampfturbinen-Kraftwerksanlage der eingangs genannten Art eine Leistungsregelung vorzuschlagen, bei welcher die Last unter minimalster Wirkungsgradeinbusse auf unter 70 % abgesenkt werden kann.

Eine Vorerwärmung der vom Verdichter angesaugten Luft ist geeignet, den Massendurchsatz durch die Gasturbine zu vermindern, was eine entsprechende Reduktion der Brennstoffmenge erlaubt, ohne dass die zulässige Gastemperatur am Eintritt in die Turbine absinkt. Dies ergibt auch für eine Kombianlage einen sehr guten Teillastwirkungsgrad, sofern für die Vorerwärmung der Verdichterluft nicht Wärme verwendet wird, welche für die Dampf- bzw. Stromproduktion hätte verwendet werden können.

Der grosse Vorteil der Erfindung ist darin zu sehen, dass für die Vorerwärmung der Verdichterluft Dampf aus der Dampfturbine entnommen wird, und zwar an einem Ort, wo das exergetische Potential des dort entnommenen Dampfes nur noch gering bis aufgebraucht ist, mithin die spezifische elektrische Leistung der Anlage ganz schwach beschnitten wird. Im Schnitt ist zu erwarten, dass die spezifische Leistung der Dampfturbine durch diese Dampfentnahme bloss um 1/10 der entnommenen, der Vorwärmung dienenden Energie abfällt.

Hierbei zeigt es sich, dass durch Begrenzung der Vorerwärmung am Verdichtereintritt, ausgehend von einer Temperatur von 15 °C (ISO), auf maximal 60 °C die Leistung der Kombianlage ohne nennenswerte Wirkungsgradeinbusse auf ca. 75 % hinunter geregelt werden kann. Da damit nur etwa die Hälfte des zulässigen Temperaturanstieges am Turbinenaustritt ausgenützt wird, könnte die Leistung der Kombianlage an sich mit einer vertretbaren Wirkungsgradeinbusse durch Verstellung der Verdichterleitschaufeln noch weiter, bis auf ca. 67 % hinunter geregelt werden.

Da aber die Verstellung der Verdichterleitschaufeln bei hoher Teillast einen besseren Wirkungsgrad gegenüber der Vorwärmung der Verdichterluft im gleichen Teillastbereich ergibt, wird man mit Vorteil zuerst von z.B. 100 % auf ca. 90 % (halber möglicher Regelbereich) mit der Leistungsregelung nach Verdichterleitschaufelverstellung operieren, anschliessend, von 90 % bis auf ca. 67 % durch Vorerwärmung der Ansaugluft zum Verdichter weiter regeln.

Mit dieser kombinierten Regelungsart, auch Regelungskaskade genannt, wird sich, ausgehend von einem thermischen Wirkungsgrad der Kombianlage von ca. 50 % bei Vollast, bei einer Teillast von 67 % noch ein Wirkungsgrad von 47,5 - 48 % einstellen. Dieser hohe Teillastwirkungsgrad der vorliegenden Anlage wird nicht bloss bei reiner Stromerzeugung erreicht, sondern auch bei Wärme-Kraft-Kopplung.

Vorteilhafte und zweckmässige Weiterbildungen der erfindungsgemässen Aufgabenlösung sind in den abhängigen Ansprüchen gekennzeichnet.

Im folgenden wird anhand der Zeichnung ein Ausführungsbeispiel der Erfindung erläutert. Alle für das unmittelbare Verständnis der Erfindung nicht erforderlichen Elemente sind fortgelassen.

KURZE BESCHREIBUNG DER FIGUREN

Es zeigt:

Fig. 1    ein Kreislaufschema einer Kombianlage mit der Regelungskaskade Verdichterleitschaufelverstellung-Verdichteransaugluftvorerwärmung und

Fig. 2    das typische Wirkungsgradverhalten verschiedener Teillastregelungsarten.

BESCHREIBUNG DES AUSFUEHRUNGSBEISPIELS

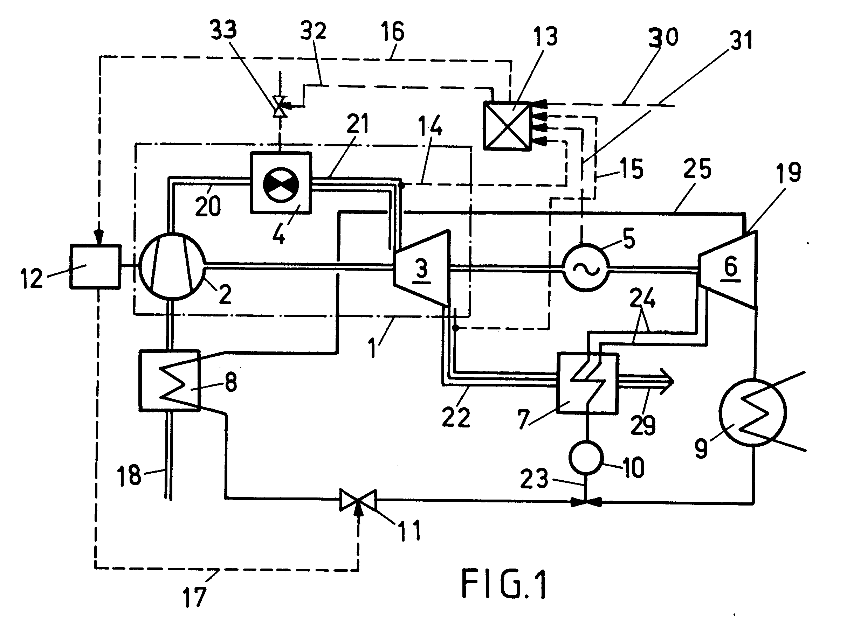

Fig. 1 zeigt das Zusammenwirken einer Kombianlage, die im wesentlichen aus einer Gasturbogruppe und einem Dampfturbinenkreislauf besteht. Die nicht ersichtliche Bereitstellung des zum Betrieb der Brennkammer 4 und allenfalls des Abhitzekessels 7 notwendigen Brennstoffes kann beispielsweise durch eine in die Kombianlage integrierte Kohlevergasung bewerkstelligt werden. Die Gasturbogruppe 1 als autonome Einheit besteht aus einem Verdichter 2, einer mit ihm gekoppelten Gasturbine 3, einer Brennkammer 4; Anschluss besteht zu einem Generator 5. Die angesaugte Luft 18 wird im Verdichter 2 komprimiert und strömt über eine Leitung als verdichtete Luft 20 in die Brennkammer 4. Die in der Brennkammer 4 zu Heissgas 21 aufbereitete Luft beaufschlagt dann die Gasturbine 3. Die Gasturbinenabgase 22 werden nun folgerichtig nicht mehr abgeblasen, sondern sie strömen durch einen Abhitzekessel 7, in welchem durch Wärmeaustausch die Dampferzeugung für die Beaufschlagung einer nachgeschalteten Dampfturbine 6 bereitgestellt wird. Beim dargestellten Abhitzekessel 7 handelt es sich um einen Zweidruck-Abhitzekessel. Selbstverständlich kann auch ein Eindruck-Abhitzekessel eingesetzt werden. Jener hat aber gegenüber diesem den Vorteil, dass die Temperatur der Rauchgase 29 tiefer abgesenkt werden kann, womit der Wirkungsgrad der Kombianlage gesteigert wird. Wahlweise kann dem Abhitzekessel 7 eine nicht dargestellte Zusatzfeuerung beigegeben werden, welche die Gasturbinenabgase 22 auf ein höheres Temperaturniveau aufbereitet. Die letztgenannte Vorkehrung erweist sich dann als vorteilhaft, wenn bei Lastspitzen die Stromleistung der Kombianlage zu steigern ist. Möglich ist ferner auch der Einsatz eines Dreidruck-Abhitzekessels. Aus der thermischen Energie der Gasturbinenabgase 22 wird also vorwiegend Hoch- und Niederdruckdampf 24 erzeugt, der die Dampfturbine 6 beaufschlagt. Diese wird vorteilhaft an den gleichen Generator 5 der Turbogruppe 1 gekoppelt. Durch die Erzeugung von zwei Dampfdrücken lässt sich das Potential der Gasturbinenabgase 22 optimal ausnützen, dergestalt, dass diese Abgase, die am Ende des Gasturbinenprozesses noch eine Temperatur von ca. 500 °C aufweisen, damit bis auf ca. 100 °C abgesenkt werden können. Der entspannte Dampf strömt nach Verlassen der Dampfturbine 6 dann in den Kondensator 9, wobei hier als Abkühlungsmedium Wasser oder Luft zum Einsatz gelangen kann. Durch eine Pumpe 10 gefördert, strömt das Kondensat 23 üblicherweise in einen nicht dargestellten Vorwärmer und von hier aus in einen ebenfalls nicht gezeigten Speisewasserbehälter und Entgaser. Nach Durchlauf dieser Stufen ist das Kondensat so weit aufbereitet, dass es wieder in den Abhitzekessel 7 zur neuerlichen Verdampfung rückgeführt werden kann. Aus der Dampfturbine 6 wird Dampf 25 entnommen, der durch einen Wärmetauscher 8 geschickt wird, in welchem im Wärmeaustauschverfahren die Ansaugluft 18 zum Verdichter 2 der Gasturbogruppe 1 vorerwähnt wird. Nach Durchlauf des Wärmetauschers 8 wird der nun zu Kondensat gewandelte Dampf über die Pumpe 10 in den Aufbereitungsprozess rückgeführt. Ein Regler 13 übernimmt die notwendigen Eingriffe zur Leistungsregelung der Kombianlage. Als Informationsträger werden dem vorprogrammierten Regler 13 neben der Soll-Leistung 30 und der Ist-Leistung 31 vorzugsweise die Eintritts- und Austrittstemperatur 14, 15 der Gasturbine 3 zugeführt. Selbstverständlich können auch andere Parameter herangezogen werden, beispielsweise anstelle der Eintrittstemperatur 14 der Gasturbine 3 deren Errechnung aus Strömungsmasse und Austrittstemperatur 15. Der Regler 13 kann somit auf eine der jeweiligen Anlage zugeschnittene Leistungsregelung vorprogrammiert werden, wobei aber selbstverständlich nur jene Regelungen in Frage kommen, welche die minimalste Wirkungsgradeinbusse garantieren, d.h. die grösstmögliche Drosselung der Brennstoffmenge über Signal 32 und Ventil 33 erlauben, ohne dass die zulässige Turbineneintrittstemperatur absinkt. An Stelle der Leistung kann auch die Drehzahl geregelt werden.

In diesem Zusammenhang kann die Leistungsregelung der Anlage grundsätzlich entweder durch alleinige Verstellung der Verdichterleitschaufeln, oder durch alleinige Vorerwärmung der Ansaugluft 18 zumVerdichter 2, oder auch durch eine Kombination sowie Regelungskaskade durchgeführt werden. Die Regelungskaskade ist dadurch charakterisiert, dass vorzugsweise einer anfänglichen Verstellung der Verdichterleitschaufeln eine Vorwärmung der Ansaugluft 18 folgt. Wenn die Anlage mittels Regelungskaskade auf Teillast gefahren werden muss, so erhält ein zur Verstellung der Verdichterleitschaufeln dienender Servomotor 12 vom Regler 13 Befehl, auf die Leitschaufeln zu wirken. Dabei genügt es vollkommen, wenn sich diese Verstellung auf die Vorleitreihe des Verdichters 2 beschränkt. Dieser Vorgang wird vom Regler 13 überwacht, indem die Gastemperaturen vor (14) und nach (15) der Gasturbine 3 kontinuierlich abgerufen werden. Sobald die im Regler 13 vorprogrammierte erste Stufe durchlaufen ist, greift eine zweite Regelungsstufe ein, welche die Leistungsabsenkung nun durch Vorerwärmung der Ansaugluft 18 zum Verdichter 2 weiterführt. Dies geschieht, indem ein in der Dampfentnahmeleitung 25 stromabwärts des Wärmetauschers 8 plaziertes Regelventil 11 durch Befehl 17 öffnet, so dass die dampfmässige Durchströmung des Wärmetrauschers 8 vonstatten gehen kann. Um eine uniforme Temperatur im Wärmetauscher 8 aufrechtzuerhalten, wird der Oeffnungsgrad des Ventils 11 nur den Wasserdurchlass ermöglichen. Dabei wird die zu diesem Zweck benötigte Dampfentnahme 25 an einer Stelle 19 der Dampfturbine 6 vorgenommen, wo das exergetische Potential des Dampfes nur noch gering bis aufgebraucht ist. Wird beispielsweise eine Ansauglufttemperatur vor Kompression von 60 °C angestrebt, so genügt es aus der Dampfturbine 6 - mit einem Eintrittsdruck von 40 - 80 bar - Dampf mit 0,4 bar zu entnehmen, dessen Kondensationspunkt bei ca. 75 °C liegt. Mithin wird die spezifische Leistung der Kombianlage dadurch nur ganz schwach beschnitten, denn die gewollte Leistungsreduktion (Teillast) wird vorwiegend durch eine Reduktion des Arbeitsmittelstromes bewirkt. Ueber dem Teillastbetriebsbereich, welcher durch Leitschaufelverstellung und Verdichterluftvorwärmung gefahren wird, versucht die Brennstoffregelung automatisch relativ Vollast aufrechtzuerhalten, d.h. die Turbineneintrittstemperatur zu halten. Erst nach Erschöpfung dieses Regelbereichs beginnt dann die Absenkung der Heissgastemperatur.

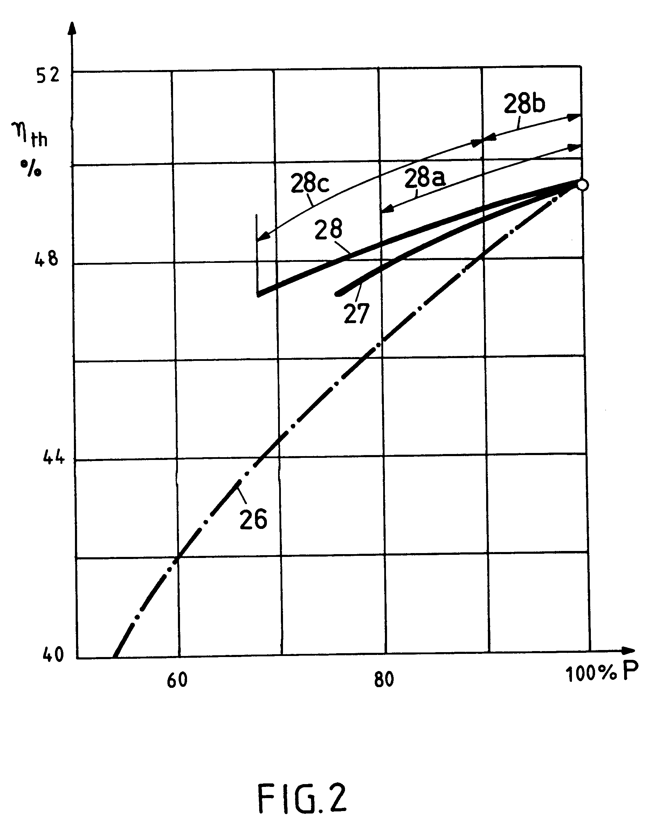

Fig. 2 zeigt das typische Wirkungsgradverhalten verschiedener Regelmethoden. Auf der Abszisse ist der obere Leistungsbereich der Kombianlage aufgetragen; auf der Ordinate ist der thermische Wirkungsgrad festgehalten. Wie daraus hervorgeht, arbeitet die Kombianlage bei Vollast (P = 100 %) mit einem thermischen Wirkungsgrad von ca. 50 %.

Kurve 26 zeigt den Verlauf des thermischen Wirkungsgrades bei einer Leistungsregelung durch reine Brennstoffregulierung. Aus dem Verlauf dieser Kurve geht recht deutlich hervor, wie hier der thermische Wirkungsgrad bei Teillastbetrieb rapid abnimmt. Bei einer Teillast der Kombianlage von 70 % beträgt er bereits nur noch ca. 44 %. Ein Betrieb auf Teillast ist bei Kombianlage kein seltener Zustand, auch kann sich ein solcher Betrieb über eine längere Zeitspanne ausdehnen. Gerade deshalb wird sehr oft der zu erbringende Wirkungsgrad bei einem Teillastbetrieb von 75 % und tiefer zugrundegelegt.

Die weitere Kurve 27 zeigt den Verlauf des thermischen Wirkungsgrades durch eine Leistungsregelung mittels Vorerwärmung der Ansaugluft zum Verdichter. Es ist hierbei unverkennbar, dass der Wirkungsgrad bedeutend besser abschneidet, als die vorangeganene besprochene Leistungsregelungsart. Durch Begrenzung der Vorerwärmung auf maximal 60 °C - bei einer Ausgangstemperatur von 15 °C (ISO) - am Verdichtereintritt kann die Leistung der Kombianlage, bei minimaler Wirkungsgradeinbusse, bis auf ca. 75 % hinunter geregelt werden. Dabei ist zu sagen, dass mit dieser Vorerwärmung der zulässige Anstieg der Abgastemperatur am Gasturbinenaustritt noch nicht voll ausgenützt ist, schätzungshalber vielleicht etwa um die Hälfte. Eine weitere Vorwärmung über etwa 60 °C vor dem Verdichter ist normalerweise nicht zulässig.

Eine weitere Leistungsabsenkung bis auf 67 % mit einem guten Wirkungsgradverlauf könnte aber durch Verstellung der Verdichterleitschaufeln erzielt werden, d.h., ab einer Teillast von 75 % könnte die weitere Absenkung durch eine Verstellung der Verdichterleitschaufeln vorgenommen werden. Da aber bei hoher Teillast die Verstellung der Verdichterleitschaufeln gegenüber der Vorerwärmung der Verdichteransaugluft einen etwas besseren Wirkungsgrad ergibt, ist es folgerichtig, mit der erstgenannten Regelungsart anzufangen und anschliessend die Regelungsart mittels Vorwärmung der Verdichteransaugluft eingreifen zu lassen. Dabei muss beachtet werden, dass durch Verstellung der Verdichterleitschaufeln rasch der höchstzulässige Anstieg der Gasturbinenaustrittstemperatur erreicht ist: Bei einer Teillast von 80 %, wie die Intervallabsenkung 28a zeigt, wäre somit die solcherart vorgenommene Leistungsregelung erschöpft, dies allerdings mit einem hohen Teillast-Wirkungsgrad.

Demnach wird man bei Teillasten unter 80 % zuerst bis ca. 90 % - was etwa die halbe zulässige Erhöhung der Turbinenaustrittstemperatur ausmacht - (Intervall 28b) die Teillast durch Verstellung der Verdichterleitschaufeln regeln, anschliessend bis auf ca. 67 % (Intervall 28c) die Vorerwärmung der Verdichterausgangsluft eingreifen lassen. Wie die Kurve 28 gut zeigt, wird sich, ausgehend von einem Wirkungsgrad von ca. 50 % bei Vollast, bei einer Teillast von 67 % noch eine Wirkungsgrad von ca. 47,5 - 48 % einstellen, was ganze 3,5 - 4 Prozentpunkte höher liegt als bei herkömmlicher Leistungsregelung durch blosse Brennstoffregulierung gemäss Kurve 26, denn der hier herbeigeführte Teillastbetrieb erfolgt bei der maximal zulässigen Heissgastemperatur am Gasturbineneintritt.

## Patentansprüche

1. Leistungsregelung einer kombinierten Gas-/Dampfturbinen-Kraftwerksanlage, im wesentlichen bestehend aus mindestens einer Gasturbogruppe (1), einem Abhitzedampferzeuger (7), einer Dampfturbine (6), einem Generator (5) und einem Kondensator (9), dadurch gekennzeichnet, dass die Absenkung der Leistung durch eine Kombination zwischen Verstellung der Leitschaufeln des Verdichters (2) und Vorerwärmung der Ansaugluft (18) zum Verdichter (2) der Gasturbogruppe (1) mittels aus der Dampfturbine (6) entnommenen Dampfes (25) geregelt wird.

2. Leistungsregelung nach Anspruch 1, dadurch gekennzeichnet, dass die Ansaugluft (18) zum Verdichter (2) in einem durch den aus der Dampfturbine (6) entnommenen Dampf (25) durchströmten Wärmetauscher (8) vorerwärmt wird.

3. Leistungsregelung nach Anspruch 1, dadurch gekennzeichnet, dass diese Regelung durch einen vorprogrammierten Regler (13) gesteuert wird.

4. Leistungsregelung nach Anspruch 1, dadurch gekennzeichnet, dass die Absenkung der Leistung von 100 % auf 90 % durch Verstellung der Leitschaufeln des Verdichters (2) und von 90 % abwärts durch Vorerwärmung der Ansaugluft (18) zum Verdichter (2) der Gasturbogruppe (1) mittels aus der Dampfturbine (6) entnommenen Dampfes (25) geregelt wird.

## Claims

1. Power control of a combined gas turbine/steam turbine power station installation consisting essentially of at least one gas turbine group (1), an exhaust heat steam generator (7), a steam turbine (6), a generator (5) and a condenser (9), characterised in that the reduction of power is controlled by a combination between adjusting the guide vanes of the compressor (2) and preheating the induction air (18) to the compressor (2) of the gas turbine group (1) by means of steam (25) extracted from the steam turbine (6).

2. Power control according to Claim 1, characterised in that the induction air (18) to the compressor (2) is preheated in a heat exchanger (8) through which flows steam (25) extracted from the steam turbine (6).

3. Power control according to Claim 1, characterised in that this control is controlled by a preprogrammed control unit (13).

4. Power control according to Claim 1, characterised in that the reduction of power from 100% to 90% is controlled by adjusting the guide vanes of the compressor (2) and from 90% downwards by preheating the induction air (18) to the compressor (2) of the gas turbine group (1) by means of steam (25) extracted from the steam turbine (6).

**Revendications**

1. Procédé de régulation de la puissance d'une installation de centrale combinée à vapeur et à gaz, se composant essentiellement d'au moins un turbogroupe à gaz (1), d'un générateur de vapeur (7) à chaleur de récupération, d'une turbine à vapeur (6), d'un générateur (5) et d'un condenseur (9), caractérisé en ce que la diminution de la puissance est régulée par une combinaison entre un réglage des aubes directrices du compresseur (2) et un préchauffage de l'air d'aspiration (18) du compresseur (2) du turbogroupe à gaz (1) au moyen de la vapeur (25) prélevée à la turbine à vapeur (6).

2. Procédé de régulation de puissance suivant la revendication 1, caractérisé en ce que l'air d'aspiration (18) du compresseur (2) est préchauffé dans un échangeur de chaleur (8) parcouru par la vapeur (25) prélevée à la turbine à vapeur (6).

3. Procédé de régulation de puissance suivant la revendication 1, caractérisé en ce que cette régulation est commandée par un régulateur préprogrammé (13).

4. Procédé de régulation de puissance suivant la revendication 1, caractérisé en ce que la diminution de puissance de 100 % à 90 % est régulée par réglage des aubes directrices du compresseur (2) et à partir de 90 % par préchauffage de l'air d'aspiration (18) du compresseur (2) du turbogroupe à gaz (1) au moyen de la vapeur (25) prélevée à la turbine à vapeur (6).

FIG.1

EP 0 304 827 B1

FIG.2